(19) Europäisches Patentamt
European Patent Office
Office européen des brevets

(11) **EP 1 243 897 B1**

(12) **EUROPÄISCHE PATENTSCHRIFT**

(45) Veröffentlichungstag und Bekanntmachung des Hinweises auf die Patenterteilung:
**18.12.2013   Patentblatt 2013/51**

(51) Int Cl.:
*G01D 5/14* *(2006.01)*     *G01D 5/16* *(2006.01)*

(21) Anmeldenummer: **01203922.8**

(22) Anmeldetag: **16.10.2001**

(54) **Magnetischer Weggeber**

Magnetic position sensor

Capteur de position magnétique

(84) Benannte Vertragsstaaten:
**AT BE CH CY DE DK ES FI FR GB GR IE IT LI LU MC NL PT SE TR**

(30) Priorität: **23.03.2001   EP 01810298**

(43) Veröffentlichungstag der Anmeldung:
**25.09.2002   Patentblatt 2002/39**

(73) Patentinhaber: **Melexis Technologies NV 3980 Tessenderlo (BE)**

(72) Erfinder:
• **Popovic, Radivoje,Dr. 1025 St. Sulpice (CH)**
• **Schott, Christian,Dr. 1110 Morges (CH)**
• **Zalunardo, Ivano 1213 Petit-Lancy, Genève (CH)**

(74) Vertreter: **Falk, Urs Patentanwaltsbüro Dr. Urs Falk Eichholzweg 9A 6312 Steinhausen (CH)**

(56) Entgegenhaltungen:
**EP-A- 0 590 222       EP-A- 0 979 988
WO-A-97/25592       WO-A-98/54547
DE-A- 10 023 503     US-A- 4 893 502**

**Beschreibung**

Die Erfindung betrifft einen magnetischen Weggeber der im Oberbegriff des Anspruchs 1 genannten Art.

Kontaktlose Weggeber für Wege im Submillimeterbereich werden heute in grossen Stückzahlen in Vorrichtungen der Maschinen- und Automobilindustrie eingesetzt.

Bei Anwendungen, bei welchen die Weggeber starkem Schmutz, wie Staub, Fasern, Öldämpfe, etc. ausgesetzt sind, stellen magnetische Weggeber eine robuste und preiswerte Alternative zu den weitverbreiteten optischen Weggebern dar, da sie keine dichte Kapselung zwischen dem bewegtem und dem unbewegtem Maschinenteil der Vorrichtung benötigen.

Eine Vorrichtung mit einem magnetischen Weggeber der im Oberbegriff des Anspruchs 1 genannten Art ist aus der DE 197 12 829 bekannt. Diese Vorrichtung weist einen entlang einer Achse verschiebbaren Kolben mit einem ringförmigen Magneten auf. Für die Bestimmung der Lage des Kolbens sind zwei Magnetfeldsensoren vorgesehen, wovon der eine die Komponente des vom Magneten erzeugten Magnetfeldes in axialer Richtung und der andere die Komponente des vom Magneten erzeugten Magnetfeldes in radialer Richtung misst. Die axiale Richtung des Magnetfeldes entspricht dabei der Verschiebungsrichtung des Kolbens. Weil die Ausgangssignale der beiden Magnetfeldsensoren nichtlinear sind, eignet sich die Vorrichtung nicht für die Bestimmung eines der kontinuierlichen Lage des Kolbens entsprechenden Positionssignals, sondern nur zur Bestimmung, ob der Kolben eine vorbestimmte Lage erreicht hat.

Eine gleiche Vorrichtung ist aus der EP 1 074 815 bekannt. Hier wird vorgeschlagen, die Ausgangssignale der beiden Magnetfeldsensoren zu kombinieren, um ein Positionssignal zu erhalten, das für die Bestimmung der kontinuierlichen Lage des Kolbens geeignet ist. Nachteilig ist, dass auch dieses Positionssignal nichtlinear ist.

Eine weitere Vorrichtung, bei der ebenfalls die axiale und die radiale Komponente des Magnetfelds gemessen werden, ist aus der EP 979988 bekannt, die darüber hinaus lehrt, zur Positionsbestimmung den Quotienten der beiden Messsignale auszuwerten.

Eine weitere Vorrichtung für die Bestimmung, ob ein Element eine vorbestimmte Lage erreicht hat, ist aus der EP 726 448 bekannt.

Aus der WO 97/25592 ist ein Positionsgeber bekannt, bei dem ein Magnetfeldsensor entweder die axiale oder die radiale Komponente des von einem Permanentmagneten erzeugten Magnetfelds misst.

Aus der US 4893502 ist ein Winkelsensor bekannt, bei dem ein Magnetfeldsensor verwendet wird, der eine einzige Komponente des Magnetfelds misst, um den Drehwinkel eines Ventils zu bestimmen.

Aus der WO 98/54547 ist ein Winkelsensor bekannt, der die axiale Komponente des von einem Permanentmagneten erzeugten Magnetfelds an vier Stellen misst und daraus mittels Differenz- und Verhältnisbildung den Drehwinkel bestimmt.

Aus der EP 590222 ist ein Positionsgeber bekannt, der einen Sensor mit einem Array von Magnetfeldsensoren umfasst, mit denen der Nulldurchgang des von einem Permanentmagneten erzeugten Magnetfelds ermittelt und daraus die Relativposition von Permanentmagnet und Sensor bestimmt wird.

Aus der DE 10023503 ist ein Positionsschalter bekannt, der drei Hallelemente aufweist, deren Ausgangssignale miteinander verglichen werden, um zu bestimmen, ob und wann ein Gegenstand eine vorbestimmte Position erreicht hat.

Der Erfindung liegt die Aufgabe zugrunde, einen magnetischen Weggeber zu entwickeln, der über einen vergleichsweise grossen Arbeitsbereich ein lineares Ausgangssignal liefert.

Die Erfindung ist in den Ansprüchen 1 und 4 gekennzeichnet. Weiterbildungen der Erfindung ergeben sich aus den abhängigen Ansprüchen.

Nachfolgend werden Ausführungsbeispiele der Erfindung anhand der Zeichnung näher erläutert.

Der magnetische Weggeber umfasst naturgemäss einen Magnetfeldsensor zur Verwendung mit einer Magnetfeldquelle, die entlang einer vorgegebenen Bahn relativ zueinander verschiebbar sind. Der Magnetfeldsensor misst zwei Komponenten des von der Magnetfeldquelle erzeugten Magnetfeldes. Aus den gemessenen Komponenten wird dann ein Positionssignal abgeleitet, das die relative Lage von Magnetfeldsensor und Magnetfeldquelle darstellt. Erfindungsgemässe Ausführungen des Weggebers zeichnen sich dadurch aus, dass die Bestimmung des Positionssignals eine Division der beiden gemessenen Komponenten des Magnetfeldes beinhaltet. Diese erfindungsgemässen Ausführungen weisen den Vorteil auf, dass das Positionssignal eine lineare Funktion des Ortes ist.

Bei einem bevorzugten Ausführungsbeispiel, bei dem sich die Magnetfeldquelle und der Magnetfeldsensor relativ zueinander entlang einer Geraden verschieben, ist das von der Magnetfeldquelle erzeugte Magnetfeld rotationssymmetrisch bezüglich einer Symmetrieachse. Der Magnetfeldsensor misst erfindungsgemäss zwei Komponenten des Magnetfeldes, die beide in einer zur Symmetrieachse der Magnetfeldquelle orthogonal verlaufenden Ebene liegen. Bei der Relativverschiebung von Magnetfeldquelle und Magnetfeldsensor ändert die Richtung des Magnetfeldes in dieser Ebene in Bezug zu den durch den Magnetfeldsensor definierten Messrichtungen. Aus dieser Richtungsänderung lässt sich durch eine Division der beiden gemessenen Magnetfeldkomponenten ein lineares Positionssignal gewinnen.

Auch wenn der Magnetfeldsensor ortsfest angeordnet ist und sich die Magnetfeldquelle auf einer Kreisbahn bewegt, lässt sich aus dem Quotienten der beiden gemessenen Magnetfeldkomponenten in einem bestimmten Arbeitsbereich ein annähernd lineares Positionssignal gewinnen.

Nachfolgend werden Ausführungsbeispiele der Erfindung anhand der Zeichnung näher erläutert.

Es zeigen:

Fig. 1      eine Vorrichtung mit einem magnetischen Weggeber,
Fig. 2      in einer Messebene herrschende geometrische Verhältnisse,
Fig. 3, 4   magnetische Weggeber mit zwei Sensoren,
Fig. 5      eine Magnetfeldquelle mit einem Magnetfeld mit radialer Symmetrie,
Fig. 6      eine Magnetfeldquelle mit einem Magnetfeld mit zirkularer Symmetrie,
Fig. 7      einen weiteren magnetischen Weggeber,
Fig. 8, 9   in der Messebene herrschende geometrische Verhältnisse,
Fig. 10     ein Diagramm,
Fig. 11     eine elektronische Schaltung, und
Fig. 12     einen magnetischen Weggeber mit mehreren Magnetfeldsensoren.

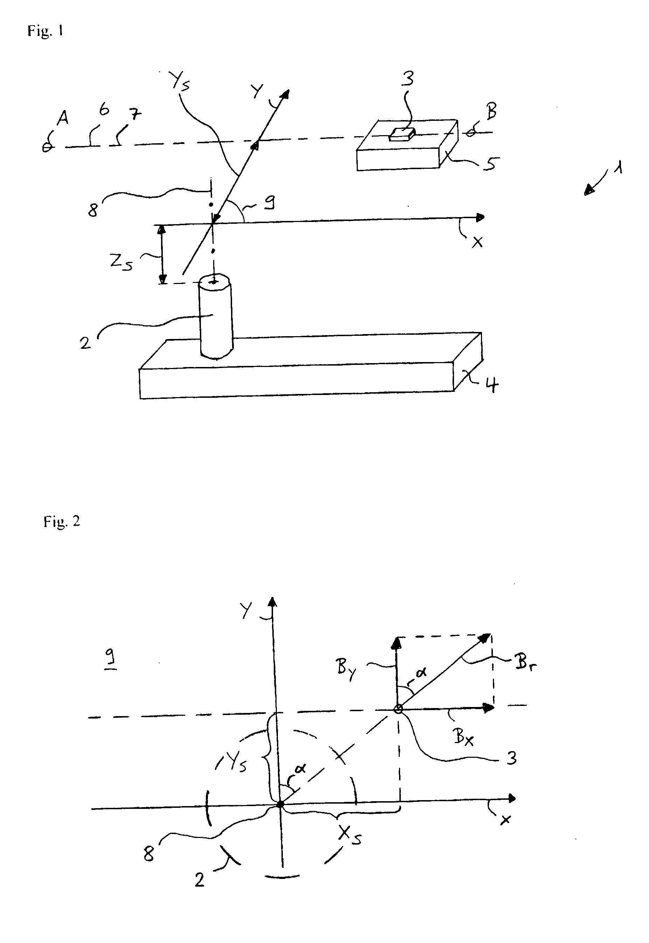

Die Fig. 1 zeigt auf schematische Weise eine Vorrichtung 1 mit einem magnetischen Weggeber, der einen Magnetfeldsensor 3 zur Verwendung mit einer Magnetfeldquelle 2 umfasst. Die Vorrichtung 1 weist ein erstes Bestandteil 4 und ein zweites Bestandteil 5 auf, deren Lage auf nicht näher erläuterte Weise relativ zueinander veränderbar ist. Die Magnetfeldquelle 2 ist am ersten Bestandteil 4 befestigt. Der Magnetfeldsensor 3 ist am zweiten Bestandteil 5 befestigt. Wenn die Lage des zweiten Bestandteils 5 relativ zur Lage des ersten Bestandteils 4 von einer ersten Endlage A in eine zweite Endlage B geändert wird, dann bewegt sich der Magnetfeldsensor 3 auf einer vorbestimmten Bahn 6 relativ zur Lage der Magnetfeldquelle 2. Die relative Lage der beiden Bestandteile 4 und 5 zueinander kann dann durch eine einzige Grösse X charakterisiert werden, die dem aktuellen Ort d des Magnetfeldsensors 3 auf der Bahn 6 entspricht. Der magnetische Weggeber dient dazu, den aktuellen Wert der Grösse X(d) zu ermitteln.

Bei dem in der Fig. 1 dargestellten Beispiel ist das erste Bestandteil 4 der Vorrichtung 1 mit der Magnetfeldquelle 2 stationär angeordnet und das zweite Bestandteil 5 mit dem Magnetfeldsensor 3 entlang einer vorgegebenen Geraden 7 zwischen den beiden Endlagen A und B verschiebbar. Als Magnetfeldquelle 2 ist ein zylindrischer Permanentmagnet vorgesehen. Das vom Permanentmagneten erzeugte Magnetfeld B ist rotationssymmetrisch bezüglich einer in Längsrichtung des Permanentmagneten verlaufenden Symmetrieachse 8. Die Gerade 7 und die Symmetrieachse 8 verlaufen orthogonal zueinander. Die Bahn 6 verläuft somit in einer orthogonal zur Symmetrieachse 8 verlaufenden Ebene 9. Mit x und y sind die Achsen eines kartesischen Koordinatensystems der Ebene 9 bezeichnet, dessen Ursprung mit dem Durchstosspunkt der Symmetrieachse 8 des Permanentmagneten zusammenfällt. Die Gerade 7 verläuft in einem Abstand $Y_S$ parallel zur x-Achse. Die Koordinaten des Magnetfeldsensors 3 in der Ebene 9 werden mit ($X_S$, $Y_S$) bezeichnet, wobei der Wert $X_S$ mit der Veränderung der Relativlage der beiden Bestandteile 4 und 5 der Vorrichtung ändert, während der Wert $Y_S$ konstant bleibt. Die Ebene 9 verläuft zudem in einem vorbestimmten Abstand $Z_S$ oberhalb des oberen Endes des Permanentmagneten.

Die Fig. 2 zeigt die Ebene 9 in der Aufsicht. Der unterhalb der Ebene 9 angeordnete Permanentmagnet ist mit einer gestrichelten Linie dargestellt. Die Rotationssymmetrie des vom Permanentmagneten erzeugten Magnetfeldes B bedeutet, dass die Feldlinien in der Ebene 9 bezüglich des Ursprunges des xy-Koordinatensystems radial verlaufen. Mit dem Vektor $B_r$ ist die in der Ebene 9 liegende Komponente des Magnetfeldes B am Ort ($X_S$, $Y_S$) des Magnetfeldsensors 3 dargestellt. Der Magnetfeldsensor 3 misst die Komponenten $B_x$ und $B_y$ des Magnetfeldes B. Seine x-Koordinate $X_S$ kann gemäss den folgenden Gleichungen

$$\tan(\alpha) = \frac{B_x}{B_y} = \frac{X_S}{Y_S} \qquad (1)$$

bestimmt werden zu

$$X_S = Y_S \frac{B_x}{B_y} \qquad (2)$$

Der Winkel $\alpha$ bezeichnet den Winkel zwischen der Richtung der radialen Komponente $B_r$ des Magnetfeldes und der y-Achse. Die Grösse $X_S$ stellt also das Positionssignal dar, das im wesentlichen durch Division der beiden Komponenten $B_x$ und $B_y$ gewonnen wird.

Montagebedingte Schwankungen des Abstands $Z_S$ haben praktisch keinen Einfluss auf das Positionssignal:

Die absoluten Werte der Komponenten $B_x$ und $B_y$ ändern zwar mit dem Abstand $Z_S$, nicht aber deren Verhältnis. Temperaturbedingte Schwankungen der Empfindlichkeit des Magnetfeldsensors werden bei der Division ebenfalls weitgehend eliminiert. Sowohl der Abstand $Z_S$ als auch der Abstand $Y_S$ sind so gewählt, dass die in Bezug zur Symmetrieachse 8 radial verlaufende Komponente $B_r$ des Magnetfeldes möglichst gross ist.

Ein für diese Anwendung geeigneter, auf dem Halleffekt beruhender Magnetfeldsensor, der zwei orthogonal zueinander orientierte Komponenten des Magnetfeldes misst, wird von der Anmelderin unter der Bezeichnung 2D-VH-11 vertrieben. Ein weiterer geeigneter Magnetfeldsensor ist in der japanischen Patentanmeldung Nr. 2000-356684 beschrieben. Möglich ist auch die Verwendung magnetoresistiver Magnetfeldsensoren. Die vom Magnetfeldsensor 3 aufgespannten Messachsen sollten möglichst parallel zur x-Achse bzw. y-Achse ausgerichtet sein. Sonst muss die Verdrehung mittels einer Eichmessung bestimmt und bei der Bestimmung des Positionssignals mittels einer Koordinatentransformation berücksichtigt werden.

Mit einem aus SmCo bestehenden, zylindrischen Permanentmagneten, dessen Durchmesser 2 mm und dessen Länge 1 mm betrug, konnte für eine Bahn 6, die entlang der Geraden 7 im Abstand Z = 0.7 mm oberhalb des Permanentmagneten und im seitlichen Abstand $Y_S$ = 1.4 mm verlief, im Arbeitsbereich von $X_S$ = -1.5 mm bis $X_S$ = +1.5 mm ein Ausgangssignal erzielt werden, dessen Abweichung von einer linearen Ideallinie weniger als ± 0.5% betrug. Eine Verdrehung der Messachsen des Magnetfeldsensors 3 gegenüber dem xy-Koordinatensystem der Ebene 9 um 2° bewirkte ohne Korrektur zwar einen Fehler, dieser lag im genannten Arbeitsbereich von $X_S$ = -1.5 mm bis $X_S$ = +1.5 mm aber unterhalb von ± 1.5%.

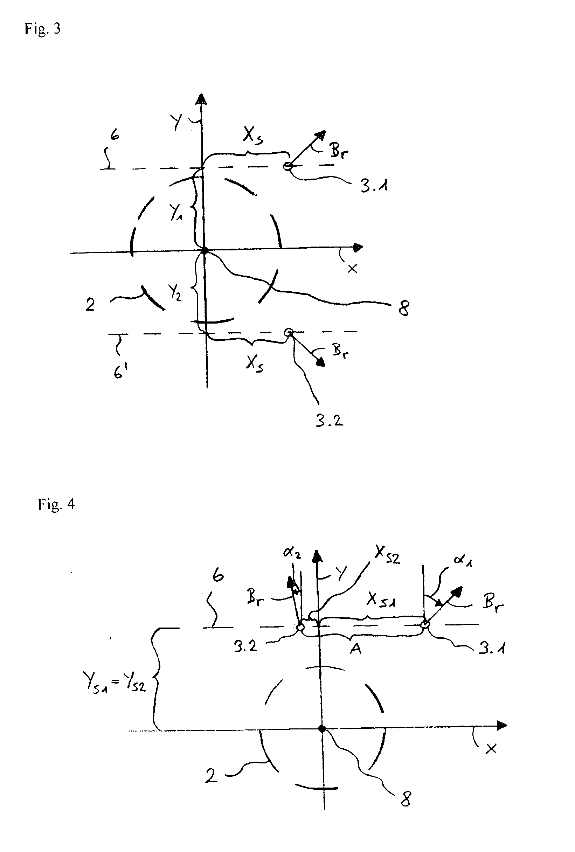

Wenn der Abstand $Y_S$ infolge unvermeidlicher Montagetoleranzen beispielsweise 1.5 mm statt 1.4 mm beträgt, dann ist das Positionssignal $X_S$ gemäss Gleichung (2) um den Faktor 1.5/1.4 grösser. Die Fig. 3 zeigt ein Ausführungsbeispiel mit zwei räumlich getrennten Magnetfeldsensoren 3.1 und 3.2, bei dem die Abhängigkeit des Positionssignals $X_S$ von montagebedingten Abweichungen eliminiert ist. Die beiden Magnetfeldsensoren 3.1 und 3.2 liefern je ein Ausgangssignal gemäss Gleichung (2). Der erste Magnetfeldsensor 3.1 bewegt sich auf der zur x-Achse parallelen Bahn 6, der zweite Magnetfeldsensor 3.2 bewegt sich auf einer ebenfalls zur x-Achse parallelen Bahn 6'. Der Abstand der beiden Bahnen 6 und 6' ist mit C bezeichnet. Die x-Koordinate des ersten und des zweiten Magnetfeldsensors 3.1 bzw. 3.2 sind gleich. Bei einem typischen Wert des Abstandes C von 3 mm können die beiden Magnetfeldsensoren 3.1 und 3.2 z.B. als CMOS Hallelemente zusammen mit der Auswerteelektronik auf einem einzigen Halbleiterchip angeordnet sein. Ihre gegenseitige Ausrichtung und ihr Abstand sind dann perfekt reproduzierbar.

Die Koordinaten $(X_{S1}, Y_{S1})$ des ersten Magnetfeldsensors 3.1 ergeben sich

$$\text{mit } \operatorname{ctan}(\alpha_1) = \frac{B_y(X_{S1}, Y_{S1})}{B_x(X_{S1}, Y_{S1})} = \frac{Y_{S1}}{X_{S1}} \text{ und } \operatorname{ctan}(\alpha_2) = \frac{B_y(X_{S2}, Y_{S2})}{B_x(X_{S2}, Y_{S2})} = \frac{Y_{S2}}{X_{S2}} \text{ und } X_{S1} = X_{S2} \text{ zu}$$

$$X_{S1} = \frac{C}{\operatorname{c\,tan}(\alpha_1) + \operatorname{c\,tan}(\alpha_2)} \text{ und } Y_{S1} = \frac{C * \operatorname{c\,tan}(\alpha_1)}{\operatorname{c\,tan}(\alpha_1) + \operatorname{c\,tan}(\alpha_2)}.$$

Die Grösse $\operatorname{ctan}(\alpha_1)$ ergibt sich aus den vom ersten Magnetfeldsensor 3.1 gemessenen Komponenten $B_x$ und $B_y$ des Magnetfeldes und die Grösse $\operatorname{ctan}(\alpha_2)$ ergibt sich aus den vom zweiten Magnetfeldsensor 3.2 gemessenen Komponenten $B_x$ und $B_y$ des Magnetfeldes. Die ermittelte Koordinate $X_{S1}$ des ersten Magnetfeldsensors 3.1, die als Positionssignal des Weggebers dient, ist unabhängig vom Abstand $Y_{S1}$ des Magnetfeldsensors 3.1 von der Symmetrieachse 8 des Permanentmagneten.

Die Fig. 4 zeigt einen magnetischen Weggeber mit zwei räumlich getrennten Magnetfeldsensoren 3.1 und 3.2, die sich beide auf der Bahn 6 bewegen und in Richtung der Bahn 6 im Abstand A hintereinander angeordnet sind. Als Magnetfeldquelle 2 dient ein zylindrischer, axial magnetisierter Permanentmagnet, der ein bezüglich seiner Längsachse rotationssymmetrisches Magnetfeld erzeugt. Die Koordinaten $(X_{S1}, Y_{S1})$ des ersten Magnetfeldsensors 3.1 ergeben sich

$$\text{mit } \tan(\alpha_1) = \frac{B_x(X_{S1}, Y_{S1})}{B_y(X_{S1}, Y_{S1})} = \frac{X_{S1}}{Y_{S1}} \text{ und } \tan(\alpha_2) = \frac{B_x(X_{S2}, Y_{S2})}{B_y(X_{S2}, Y_{S2})} = \frac{X_{S2}}{Y_{S2}} \text{ und } Y_{S1} = Y_{S2} \text{ zu}$$

$$X_{SI} = \frac{A * \tan(\alpha_1)}{\tan(\alpha_1) + \tan(\alpha_2)} \quad \text{und} \quad Y_{SI} = \frac{A}{\tan(\alpha_1) + \tan(\alpha_2)}.$$

Die Grösse $\tan(\alpha_1)$ ergibt sich aus den vom ersten Magnetfeldsensor 3.1 gemessenen Komponenten $B_x$ und $B_y$ des Magnetfeldes und die Grösse $\tan(\alpha_2)$ ergibt sich aus den vom zweiten Magnetfeldsensor 3.2 gemessenen Komponenten $B_x$ und $B_y$ des Magnetfeldes.

Die ermittelte Koordinate $X_{S1}$ des ersten Magnetfeldsensors 3.1, die als Positionssignal des Weggebers dient, ist unabhängig vom Abstand $Y_{S1}$ des Magnetfeldsensors 3.1 von der Symmetrieachse 8 des Permanentmagneten.

Diese Weggeber mit zwei Magnetfeldsensoren können auch als zweidimensionaler Positionsgeber eingesetzt werden, wo sich die Magnetfeldquelle 2 und die Messanordnung mit den beiden Magnetfeldsensoren 3.1 und 3.2 in einer vorbestimmten Ebene relativ zueinander bewegen, wobei dann die Koordinaten $X_{S1}$ und $Y_{S1}$ zwei Positionssignale darstellen.

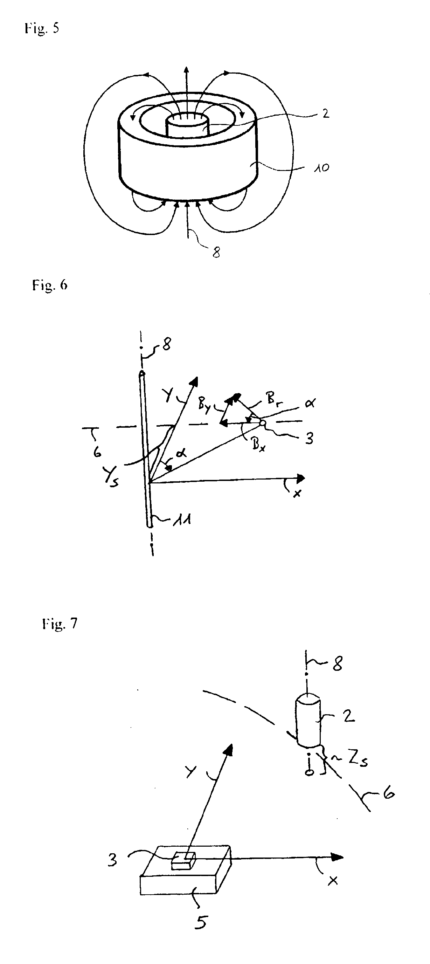

Die Fig. 5 zeigt eine Vorrichtung mit einem ferromagnetischen Joch 10. Die Funktion des Jochs 10 besteht darin, das von der Magnetfeldquelle 2 erzeugte Magnetfeld (mit Feldlinien dargestellt) im Bereich der Ebene 9 zu konzentrieren. Sowohl die Magnetfeldquelle 2 als auch das Joch 10 sind hier rotationssymmetrisch bezüglich der Symmetrieachse 8.

Als Magnetfeldquelle 2 kann anstelle des Permanentmagneten auch eine Spule dienen. Der durch die Spule fliessende Strom kann dann moduliert und das Signal des Magnetfeldsensors mit der bekannten Lock-in Technik ermittelt werden.

Als Magnetfeldquelle 2 kann, wie in der Fig. 6 gezeigt ist, anstelle des Permanentmagneten auch ein von einem Strom durchflossener Leiter 11 dienen. In diesem Fall ist das Magnetfeld bezüglich der Symmetrieachse 8 ebenfalls rotationssymmetrisch. Während der Verlauf des Magnetfeldes $B_r$ in der Ebene 9 beim Permanentmagneten bezüglich der Symmetrieachse 8 radial ist, ist er beim stromdurchflossenen Leiter 11 zirkular. Deshalb gilt in diesem Fall für die Koordinate $X_S$ des Magnetfeldsensors 3:

$$X_S = Y_S \frac{B_y}{B_x} \qquad\qquad (3).$$

Das folgende, in der Fig. 7 dargestellte Ausführungsbeispiel entspricht weitgehend dem in der Fig. 1 gezeigten Beispiel. Allerdings bewegt sich die Magnetfeldquelle 2, vorzugsweise ein zylindrischer Permanentmagnet, bei diesem Beispiel entlang einer kreisförmigen Bahn 6, während der Magnetfeldsensor 3 ortsfest im Zentrum der kreisförmigen Bahn 6, aber im Abstand $Z_S$ unterhalb der unteren Stirnseite des Permanentmagneten, in der Ebene 9 angeordnet ist. Der Magnetfeldsensor 3 misst wiederum zwei kartesische Komponenten $B_x$ und $B_y$ des von der Magnetfeldquelle 2 erzeugten Magnetfeldes in der Ebene 9. Die Ebene 9 verläuft orthogonal zur Symmetrieachse 8 des Permanentmagneten.

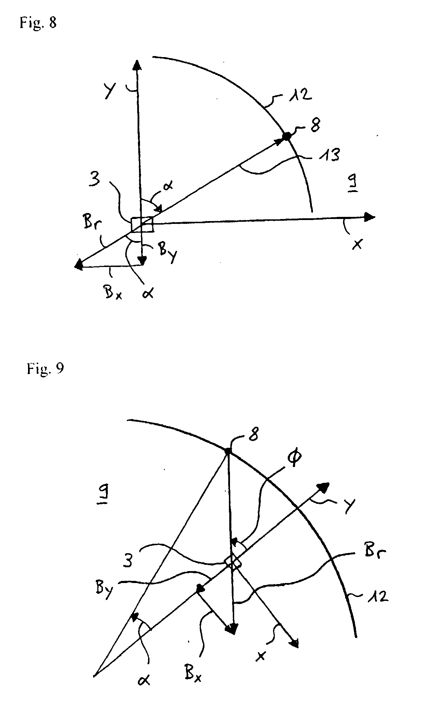

Die Fig. 8 zeigt die Verhältnisse in der Ebene 9. Wenn sich die Magnetfeldquelle 2 entlang des Kreises 12 bewegt, dann ändert sich die Richtung der in der Ebene 9 liegenden Komponente des Magnetfeldes $B_r$. Als Positionssignal eignet sich der Winkel $\alpha$ zwischen der y-Achse und dem Vektor 13, der vom Ursprung des xy-Koordinatensystems zum Durchstosspunkt der Symmetrieachse 8 des Permanentmagneten in der Ebene 9 zeigt. Es gilt:

$$\alpha = \arctan\frac{B_x}{B_y} \qquad\qquad (3)$$

Die Fig. 9 zeigt die Verhältnisse in der Ebene 9 für ein Beispiel, bei dem der Magnetfeldsensor 3 nicht im Zentrum des Kreises 12, sondern an einem beliebigen Ort angeordnet ist, vorzugsweise an einem Ort, wo der Abstand des Magnetfeldsensors 3 von der kreisförmigen Bahn 6 kleiner als der Radius der kreisförmigen Bahn 6 ist. Die Messrichtungen x und y des Magnetfeldsensors 3 sind so orientiert, dass die in der Ebene 9 liegende Komponente $B_r$ des Magnetfeldes in Richtung der y-Achse verläuft, wenn der Winkel $\alpha$ verschwindet. Der Winkel zwischen der Magnetfeldkomponente $B_r$ und der y-Richtung des Magnetfeldsensors 3 ist als Winkel $\phi$ bezeichnet. Wenn sich der Magnetfeldsensor 3 relativ nahe beim Kreis 12 befindet, dann bewirken innerhalb eines vorgegebenen Arbeitsbereiches W kleine Positionsänderungen, d.h. kleine Änderungen des Winkels $\alpha$, vergleichsweise grosse Änderungen des Winkels $\phi$ und somit grosse Änderungen des Messsignals des Magnetfeldsensors 3. Demgegenüber steht der Nachteil, dass das Messsignal nur in einem beschränkten Arbeitsbereich annähernd linear vom Winkel $\alpha$ abhängt.

Wenn mit $R_1$ der Abstand der Magnetfeldquelle 2 vom Mittelpunkt 14 der kreisförmigen Bahn 6 und mit $R_2$ der Abstand des Magnetfeldsensors 3 vom Mittelpunkt der kreisförmigen Bahn 6 bezeichnet wird, dann erhält man mit dem Sinussatz

$$\frac{\sin(\pi - \phi)}{R_1} = \frac{\sin(\phi - \alpha)}{R_2} \qquad (4)$$

die Beziehung zwischen dem Winkel $\phi$ und dem Winkel $\alpha$ zu:

$$\phi = \arctan\left(\frac{R_1 \sin\alpha}{R_2 \cos\alpha - R_2}\right) \qquad (5).$$

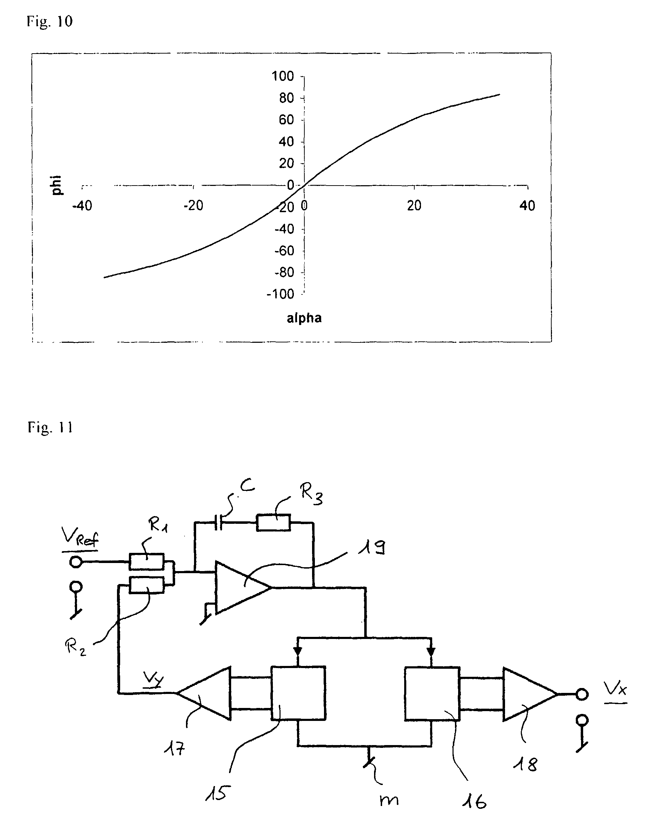

Die Fig. 10 zeigt die Beziehung $\phi(\alpha)$ für den Fall $R_2 = \frac{1}{2} R_1$. Die Beziehung $\phi(\alpha)$ ist im Bereich von $\alpha = -7°$ bis $\alpha = +7°$ linear innerhalb von $\pm 1\%$. Im Fall $R_2 = \frac{3}{4} R_1$ ist die Beziehung $\phi(\alpha)$ im Bereich von $\alpha = -3.5°$ bis $\alpha = +3.5°$ linear innerhalb von $\pm 1\%$.

Aus dem mittels des Magnetfeldsensors 3 aus den Komponenten $B_x$ und $B_y$ des Magnetfeldes gewonnenen Signal ergibt sich aus der Beziehung $\phi = \arctan\dfrac{B_x}{B_y}$ und Gleichung (5) die Beziehung

$$\left(\frac{R_1 \sin\alpha}{R_2 \cos\alpha - R_2}\right) = \frac{B_x}{B_y} \qquad (6).$$

Als Positionssignal kann nun der Winkel $\alpha$ aus der Gleichung (6) ermittelt werden. Das Positionssignal $\alpha\,(B_x/B_y)$ ist, wie oben dargelegt, innerhalb vorbestimmter Grenzen eine lineare Funktion des Quotienten $B_x/B_y$.

Es sei hier angemerkt, dass im Spezialfall, wo der Magnetfeldsensor 3 im Zentrum des von der Magnetfeldquelle 2 durchlaufenen Kreises angeordnet ist, es nicht nötig ist, dass das Magnetfeld irgendeine Symmetrie aufweist. Als Magnetfeldquelle kann z.B. auch ein zylinderförmiger Permanentmagnet verwendet werden, dessen Symmetrieachse zum Kreismittelpunkt zeigt. Auch kann dann $Z_S = 0$ gewählt werden.

Die Fig. 11 zeigt eine elektronische Schaltung für einen Magnetfeldsensor 3, der ein erstes Hallelement 15 zur Messung der Komponente $B_y$ und ein zweites Hallelement 16 zur Messung der Komponente $B_x$ aufweist. Die Division der gemessenen Komponenten des Magnetfeldes erfolgt analog, weil bei dieser Schaltung der durch das zweite Hallelement 16 fliessende Strom proportional zur Hallspannung des ersten Hallelementes 15 ist. Die Schaltung liefert ein Ausgangssignal $V_{Out}$, das proportional zum Verhältnis $B_x/B_y$ ist. Ein Massepotential der Schaltung ist mit m bezeichnet. Die Schaltung umfasst:

- einen ersten Operationsverstärker 17, der die sich zwischen den beiden Spannungskontakten des ersten Hallelementes 15 einstellende Hallspannung differentiell abgreift und bezüglich des Massepotentials m referenziert. Für das Ausgangssignal $V_y$ des ersten Operationsverstärkers 17 gilt bei einem Verstärkungsfaktor von Eins: $V_y = S_1 \ast I_1 \ast B_y$, wobei $I_1$ den durch das erste Hallelement 15 fliessenden Strom und $S_1$ die Empfindlichkeit des ersten Hallelementes 15 bezeichnen.

- einen zweiten Operationsverstärker 18, der die sich zwischen den beiden Spannungskontakten des zweiten Hallelementes 16 einstellende Hallspannung differentiell abgreift, verstärkt und bezüglich des Massepotentials m referenziert. Für das Ausgangssignal $V_x$ des zweiten Operationsverstärkers 18 gilt bei einem Verstärkungsfaktor von Eins: $V_x = S_2 \ast I_2 \ast B_x$, wobei $I_2$ den durch das zweite Hallelement fliessenden Strom und $S_2$ die Empfindlichkeit des zweiten Hallelementes 16 bezeichnen. Das Ausgangssignal $V_x$ des zweiten Operationsverstärkers 18 dient als Ausgangssignal $V_{Out}$ der Schaltung: $V_{Out} = V_x$. Da die beiden Hallelemente 15 und 16 parallel geschaltet sind, gilt $I_1 = I_2$. Da die beiden Hallelemente 15 und 16 zudem möglichst gleiche Eigenschaften aufweisen sollen, gilt $S_1 = S_2$.

- einen aus einem dritten Operationsverstärker 19, einem Widerstand $R_3$ und einem Kondensator C gebildeten PI-Regler, dessem invertierenden Eingang über einen ersten Widerstand $R_1$ eine Referenzspannung $V_{Ref}$ und über einen zweiten Widerstand $R_2$ die Ausgangsspannung Vy des ersten Operationsverstärkers 17 zugeführt wird und dessen nicht invertierender Eingang mit der Masse m verbunden ist. Über die aus dem ersten Hallelement 15 und dem ersten Operationsverstärker 17 gebildete Regelstrecke stellt sich $V_y = -V_{Ref}$ ein.

Der Ausgang des dritten Operationsverstärkers 19 speist je einen Stromkontakt des ersten und des zweiten Hallelementes 15 bzw. 16, während der andere Stromkontakt der beiden Hallelemente 15 und 16 an der Masse m liegt.

Durch Umformung der Gleichungen erhält man $V_{Out} = -V_{Ref} * B_x/B_y$.

Die folgenden Beispiele betreffen magnetische Weggeber, bei denen entweder mindestens ein weiterer Magnetfeldsensor oder mindestens eine weitere Magnetfeldquelle vorgesehen ist, um den linearen Arbeitsbereich zu vergrössern.

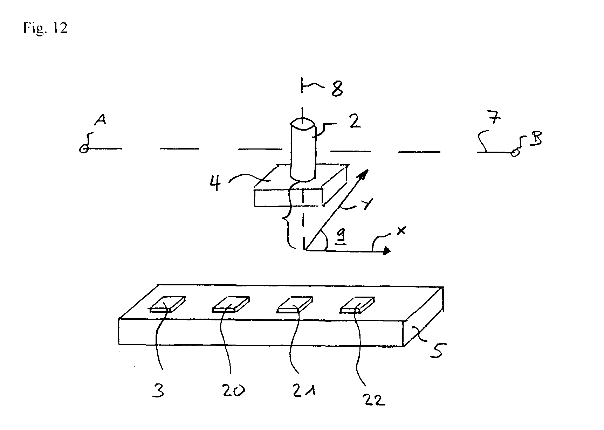

Die Fig. 12 zeigt eine Vorrichtung mit einem magnetischen Weggeber, bei dem auf dem Bestandteil 5 ein zweiter, und fakultativ ein dritter, vierter, etc. Magnetfeldsensor 20, 21 bzw. 22 angeordnet ist. Die Magnetfeldsensoren 3, 20, 21 und 22 sind in Bewegungsrichtung, d.h. in Richtung der Geraden 7 in einem vorbestimmten Abstand A angeordnet. Bei dem anhand der Figuren 1 und 2 erläuterten Zahlenbeispiel war das Signal des Magnetfeldsensors 3 in einem Arbeitsbereich von $X_S = -1.5$ mm bis $X_S = +1.5$ mm bei einer vorgegebenen Genauigkeit von $\pm$ 2% linear. Wenn nun der Abstand A zu A = 3 mm festgelegt wird, dann befindet sich immer jeweils einer der Magnetfeldsensoren 3, 20, 21 oder 22 in seinem linearen Arbeitsbereich. Da das Signal der Magnetfeldsensoren 3, 20, 21 und 22 gemäss Gleichung (2) monoton ist, kann aus den vier Signalen der Magnetfeldsensoren 3, 20, 21 und 22 dasjenige Signal bestimmt werden, das zu demjenigen Magnetfeldsensor gehört, der sich im linearen Bereich befindet. Dies ist nämlich immer dasjenige Signal mit dem kleinsten Absolutwert.

Eine andere Möglichkeit, den Arbeitsbereich zu erweitern, besteht darin, mehrere Magnetfeldquellen zu verwenden, z.B. ein Magnetband mit periodisch abwechselnder Richtung der Magnetisierung Nord-Süd. In der Regel sind dann aber zwei Magnetfeldsensoren nötig, so dass jeweils mindestens einer ein brauchbares Signal liefert. Auf diese Weise können allfällige Totbereiche des erzeugten Magnetfeldes überbrückt werden.

## Patentansprüche

1. Magnetischer Weggeber zur Verwendung mit einer Magnetfeldquelle (2), die ein Magnetfeld erzeugt, das rotationssymmetrisch bezüglich einer Symmetrieachse (8) ist, wobei der magnetische Weggeber einen Magnetfeldsensor (3; 3.1) umfasst, der relativ zur Magnetfeldquelle (2) verschiebbar ist, wobei der Magnetfeldsensor (3; 3.1) zwei Komponenten des von der Magnetfeldquelle (2) erzeugten Magnetfeldes misst und wobei aus den gemessenen Komponenten ein Positionssignal abgeleitet wird, **dadurch gekennzeichnet, dass** die beiden gemessenen Komponenten des Magnetfeldes in einer zur Symmetrieachse (8) der Magnetfeldquelle (2) orthogonal verlaufenden Ebene (9) liegen und dass die Bestimmung des Positionssignals eine Division der einen gemessenen Komponente des Magnetfeldes durch die andere gemessene Komponente des Magnetfeldes beinhaltet.

2. Magnetischer Weggeber nach Anspruch 1, **dadurch gekennzeichnet, dass** sich die Magnetfeldquelle (2) bei der Relativwerschiebung entlang einer kreisförmigen Bahn (6) bewegt und dass der Abstand des Magnetfeldsensors (3) von der kreisförmigen Bahn (6) kleiner als der Radius der kreisförmigen Bahn (6) ist.

3. Magnetischer Weggeber nach Anspruch 1 oder 2, der des weiteren eine elektronische Schaltung zum Betrieb des Magnetfeldsensors (3) umfasst, wobei der Magnetfeldsensor (3) ein erstes Hallelement (15) für die Messung der ersten Komponente des Magnetfeldes und ein zweites Hallelement (16) für die Messung der zweiten Komponente des Magnetfeldes aufweist, wobei die Division der gemessenen Komponenten des Magnetfeldes analog erfolgt, indem die elektronische Schaltung eine Regelschlaufe bildet, um einen durch das erste Hallelement (15) fliessenden Strom so zu steuern, dass die Hallspannung des ersten Hallelementes (15) gleich einer Referenzspannung ist und die einen durch das zweite Hallelement (16) fliessenden Strom liefert, der proportional zu dem durch das erste Hallelement (15) fliessenden Strom ist, und indem die Hallspannung des zweiten Hallelementes (16) das Divisionssignal darstellt.

4. Magnetischer Weggeber zur Verwendung mit einer Magnetfeldquelle (2), die ein Magnetfeld erzeugt, das rotationssymmetrisch bezüglich einer Symmetrieachse (8) ist, wobei der magnetische Weggeber einen ersten und einen zweiten Magnetfeldsensor (3.1; 3.2) umfasst, die relativ zur Magnetfeldquelle (2) verschiebbar sind, **dadurch gekennzeichnet, dass** die beiden Magnetfeldsensoren (3.1; 3.2) je zwei Komponenten des Magnetfeldes messen, die in einer zur Symmetrieachse (8) der Magnetfeldquelle (2) orthogonal verlaufenden Ebene (9) liegen, und dass mindestens ein Positionssignal gebildet wird, das eine Division der einen, vom ersten Magnetfeldsensor (3.1) gemessenen Komponente des Magnetfeldes durch die andere, vom ersten Magnetfeldsensor (3.1) gemessenen Komponente des Magnetfeldes beinhaltet und das eine Division der einen, vom zweiten Magnetfeldsensor (3.2) gemessenen Komponente des Magnetfeldes durch die andere, vom zweiten Magnetfeldsensor (3.2) gemessenen Komponente des Magnetfeldes beinhaltet.

5. Magnetischer Weggeber nach Anspruch 4, der des weiteren eine elektronische Schaltung zum Betrieb der beiden Magnetfeldsensoren (3.1, 3.2) umfasst, wobei der erste und zweite Magnetfeldsensor (3.1; 3.2) je ein erstes Hallelement (15) für die Messung der ersten Komponente des Magnetfeldes und ein zweites Hallelement (16) für die Messung der zweiten Komponente des Magnetfeldes aufweisen, und wobei die Division der gemessenen Komponenten des Magnetfeldes analog erfolgt, indem die elektronische Schaltung eine Regelschlaufe bildet, um einen durch das erste Hallelement (15) fliessenden Strom so zu steuern, dass die Hallspannung des ersten Hallelementes (15) gleich einer Referenzspannung ist und die einen durch das zweite Hallelement (16) fliessenden Strom liefert, der proportional zu dem durch das erste Hallelement (15) fliessenden Strom ist, und indem die Hallspannung des zweiten Hallelementes (16) das Divisionssignal darstellt.

6. Magnetischer Weggeber nach einem der Ansprüche 1 bis 5, der des weiteren ein ferromagnetisches Joch (10) umfasst, um das Magnetfeld in die Ebene (9) zu konzentrieren.

**Claims**

1. Magnetic position encoder for use with a magnetic field source that produces a magnetic field that is rotationally symmetrical in relation to an axis of symmetry (8), the magnetic field encoder comprising a magnetic field sensor (3; 3.1) movably positionable relative to the magnetic field source (2), whereby the magnetic field sensor (3; 3.1) measures two components of the magnetic field produced by the magnetic field source (2) and whereby a position signal is derived from the measured components, **characterised in that** the two measured components of the magnetic field lie in a plane (9) running orthogonally to the axis of symmetry (8) of the magnetic field source (2) and that the determination of the position signal includes a division of one of the measured components of the magnetic field by the other measured component of the magnetic field.

2. Magnetic position encoder according to claim 1, **characterised in that** the magnetic field source (2) moves with the relative movement along a circular path (6) and that the distance of the magnetic field sensor (3) to the circular path (6) is less than the radius of the circular path (6).

3. Magnetic position encoder according to claim 1 or 2, further comprising an electronic circuit for operating the magnetic field sensor (3), whereby the magnetic field sensor (3) has a first Hall element (15) for measuring the first component of the magnetic field and a second Hall element (16) for measuring the second component of the magnetic field, whereby the division of the measured components of the magnetic field takes place analogously in that the electronic circuit forms a control loop for controlling a current flowing through the first Hall element (15) such that the Hall voltage of the first Hall element (15) is equal to a reference voltage and provides a current flowing through the second Hall element (16) that is proportional to the current flowing through the first Hall element (15) and in that the Hall voltage of the second Hall element (16) represents the division signal.

4. Magnetic position encoder for use with a magnetic field source (2) that produces a magnetic field which is rotationally symmetrical in relation to an axis of symmetry (8), the magnetic position encoder comprising a first and second magnetic field sensor (3.1; 3.2) movably positionable relative to the magnetic field source (2), **characterised in that** the two magnetic field sensors (3.1; 3.2) each measure two components of the magnetic field which lie in a plane (9) running orthogonally to the axis of symmetry (8) of the magnetic field source (2), and that at least one position signal is formed which includes a division of one component of the magnetic field measured by the first magnetic field sensor (3.1) by the other component of the magnetic field measured by the first magnetic field sensor (3.1) and which includes a division of one component of the magnetic field measured by the second magnetic field sensor (3.2) by the other component of the magnetic field measured by the second magnetic field sensor (3.2).

5. Magnetic position encoder according to claim 4, further comprising an electronic circuit for operating the two magnetic field sensors (3.1, 3.2), wherein the first and second magnetic field sensor (3.1; 3.2) each has a first Hall element (15) for measuring the first component of the magnetic field and a second Hall element (16) for measuring the second component of the magnetic field, and wherein the division of the measured components of the magnetic field takes place analogously in that the electronic circuit forms a control loop for controlling a current flowing through the first Hall element (15) such that the Hall voltage of the first Hall element (15) is equal to a reference voltage and provides a current flowing through the second Hall element (16) that is proportional to the current flowing through the first Hall element (15) and wherein the Hall voltage of the second Hall element (16) represents the division signal.

**6.** Magnetic position encoder according to any of claims 1 to 5, further comprising a ferromagnetic yoke (10) for concentrating the magnetic field in the plane (9).

**Revendications**

**1.** Codeur de distance magnétique pour utilisation avec une source de champ magnétique (2) qui produit un champ magnétique symétrique en rotation par rapport à un axe de symétrie (8), lequel codeur de distance magnétique comprenant un capteur de champ magnétique (3; 3.1) qui peut se déplacer par rapport à la source de champ magnétique (2), le capteur de champ magnétique (3 ; 3.1) mesurant deux composantes du champ magnétique produit par la source de champ magnétique (2) et un signal de position étant dérivé des composantes mesurées, **caractérisé en ce que** les deux composantes mesurées du champ magnétique se situent dans un plan (9) perpendiculaire à l'axe de symétrie (8) de la source de champ magnétique (2) et **en ce que** la détermination du signal de position inclut une division d'une composante mesurée du champ magnétique par l'autre composante mesurée du champ magnétique.

**2.** Codeur de distance magnétique selon la revendication 1, **caractérisé en ce que** la source de champ magnétique (2) se déplace lors du déplacement relatif le long d'une trajectoire circulaire (6) et **en ce que** la distance entre le capteur de champ magnétique (3) et la trajectoire circulaire (6) est plus petite que le rayon de la trajectoire circulaire (6).

**3.** Codeur de distance magnétique selon la revendication 1 ou 2, qui comprend en outre un circuit électronique pour l'opération du capteur de champ magnétique (3), le capteur de champ magnétique (3) comportant un premier élément à effet Hall (15) pour la mesure de la première composante du champ magnétique et un deuxième élément à effet Hall (16) pour la mesure de la deuxième composante du champ magnétique, la division des composantes mesurées du champ magnétique s'effectuant de façon analogique par le fait que le circuit électronique forme une boucle de contrôle pour réguler un courant passant par le premier élément à effet Hall (15) de telle manière que la tension de Hall du premier élément à effet Hall (15) soit égale à une tension de référence et qui fournit un courant passant par le deuxième élément à effet Hall (16) proportionnel au courant passant par le premier élément à effet Hall (15), et par le fait que la tension de Hall du deuxième élément à effet Hall (16) représente le signal de division.

**4.** Codeur de distance magnétique pour utilisation avec une source de champ magnétique (2) qui produit un champ magnétique symétrique en rotation par rapport à un axe de symétrie (8), lequel codeur de distance magnétique comprenant un premier et un deuxième capteur de champ magnétique (3.1; 3.2) qui peuvent se déplacer par rapport à la source de champ magnétique (2), **caractérisé en ce que** les deux capteurs de champ magnétique (3.1; 3.2) mesurent chacun deux composantes du champ magnétique qui se trouvent dans un plan (9) perpendiculaire à l'axe de symétrie (8) de la source de champ magnétique (2), et **en ce qu'**au moins un signal de position est constitué, qui inclut une division d'une composante du champ magnétique mesurée par le premier capteur de champ magnétique (3.1) par l'autre composante du champ magnétique mesurée par le premier capteur de champ magnétique (3.1) et une division d'une composante du champ magnétique mesurée par le deuxième capteur de champ magnétique (3.2) par l'autre composante du champ magnétique mesurée par le deuxième capteur de champ magnétique (3.2).

**5.** Codeur de distance magnétique selon la revendication 4, qui comprend en outre un circuit électronique pour l'opération des deux capteurs de champ magnétique (3.1, 3.2), les premier et deuxième capteurs de champ magnétique (3.1,3.2) comportant chacun un premier élément à effet Hall (15) pour la mesure de la première composante du champ magnétique et un deuxième élément à effet Hall (16) pour la mesure de la deuxième composante du champ magnétique, la division des composantes mesurées du champ magnétique s'effectuant de façon analogique par le fait que le circuit électronique forme une boucle de contrôle pour réguler un courant passant par le premier élément à effet Hall (15) de telle manière que la tension de Hall du premier élément à effet Hall (15) soit égale à une tension de référence et qui fournit un courant passant par le deuxième élément à effet Hall (16) proportionnel au courant passant par le premier élément à effet Hall (15), et par le fait que la tension de Hall du deuxième élément à effet Hall (16) représente le signal de division.

6. Codeur de distance magnétique selon l'une des revendications 1 à 5, qui comprend en outre une culasse ferromagnétique (10) destinée à concentrer le champ magnétique dans le plan (9).

Fig. 1

Fig. 2

Fig. 3

Fig. 4

Fig. 5

Fig. 6

Fig. 7

Fig. 8

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19712829
- EP 1074815 A
- EP 979988 A
- EP 726448 A
- WO 9725592 A
- US 4893502 A
- WO 9854547 A
- EP 590222 A
- DE 10023503
- JP 2000356684 A